(19) Europäisches Patentamt
European Patent Office
Office européen des brevets

(11) Veröffentlichungsnummer: **0 362 653 B1**

(12) # EUROPÄISCHE PATENTSCHRIFT

(45) Veröffentlichungstag der Patentschrift: **28.04.93**

(51) Int. Cl.[5]: **C08G 18/78**, C08G 18/80, C09D 5/44

(21) Anmeldenummer: **89117641.4**

(22) Anmeldetag: **25.09.89**

Die Akte enthält technische Angaben, die nach dem Eingang der Anmeldung eingereicht wurden und die nicht in dieser Patentschrift enthalten sind.

(54) **Verfahren zur Herstellung von kathodisch abscheidbaren, selbstvernetzenden Lackbindemitteln.**

(30) Priorität: **29.09.88 AT 2402/88**

(43) Veröffentlichungstag der Anmeldung:
**11.04.90 Patentblatt 90/15**

(45) Bekanntmachung des Hinweises auf die Patenterteilung:
**28.04.93 Patentblatt 93/17**

(84) Benannte Vertragsstaaten:
**BE DE ES FR GB IT NL SE**

(56) Entgegenhaltungen:
**EP-A- 0 000 194**
**FR-A- 2 158 033**
**US-A- 3 773 729**

**Angewandte Makromolekulare Chemie 141. 179 (1986).**

(73) Patentinhaber: **Vianova Kunstharz Aktiengesellschaft**
**Bundesstrasse 175**
**A-8402 Werndorf(AT)**

(72) Erfinder: **Paar, Willibald, Dr.**
**Schanzelgasse 19**
**A-8010 Graz(AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 362 653 B1

## Beschreibung

Die Erfindung betrifft ein Verfahren zur Herstellung von kathodisch abscheidbaren, selbstvernetzenden Lackbindemitteln, gemäß welchem vernetzungsfähige Gruppen durch Reaktion von Hydroxylgruppen und/oder primären und/oder sekundären Aminogruppen der Bindemittel mit diblockierten Triisocyanaten der allgemeinen Formel

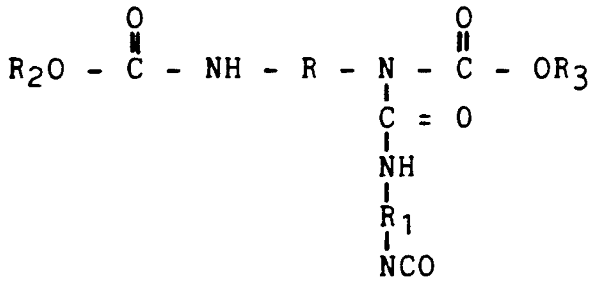

wobei

- R ein von einem Diisocyanat stammender aliphatischer, cycloaliphatischer oder aromatischer Rest,
- $R_1$ ein von einem Diisocyanat, dessen NCO-Gruppen überwiegend verschiedene Reaktivität aufweisen, stammender aliphatischer, cycloaliphatischer oder aromatischer Rest ist und
- $R_2$ und $R_3$ gleiche oder verschiedene Reste von NCO-Blokkierungsmitteln darstellen,

in die Bindemittel eingeführt werden.

Diblockierte Triisocyanate, die unter die allgemeine Formel fallen, sind von D. Wendisch et al., Angew. Makromol. Chemie 141, 179(1986) bereits beschrieben.

Aus der DE-OS 22 52 536 ist ein Verfahren zur Herstellung selbstvernetzender Bindemittel für kathodisch abscheidbare Elektrotauchlacke bekannt, mittels welchem die Hydroxylgruppen von Epoxidharz-Aminaddukten mit partiell blockierten Polyisocyanaten umgesetzt werden. Als partiell blockierte Polyisocyanate werden dabei halbblockierte Diisocyanate eingesetzt, wenn auch in der Beschreibung in einer summarischen Aufzählung einzelne Tri- und Tetraisocyanate genannt werden. Die Literaturstelle gibt keine Auskunft über eine Methode, solche Polyisocyanate partiell in der Weise zu blockieren, daß im wesentlichen Ausmaß eine Monoisocyanatverbindung zum Einsatz gelangt.

Die erwähnten halbblockierten Diisocyanate werden, wie in vielen Literaturstellen beschrieben, zur Einführung von reaktionsfähigen Gruppen in Polymere benutzt, die als selbstvernetzende, wärmehärtende Lackbindemittel, besonders in wasserverdünnbaren Elektrotauchlacken, Verwendung finden. Da beim Einsatz der üblichen halbblockierten Diisocyanate nur jeweils eine vernetzende Gruppe eingeführt wird, ist auf diese Weise eine ausreichende Vernetzung der Polymeren kaum zu erzielen.

Es wurde nun gefunden, daß eine Verbesserung bezüglich der chemischen und mechanischen Eigenschaften der Filme von kathodisch abscheidbaren und im wesentlichen durch Urethanverknüpfung selbstvernetzenden Lackbindemitteln möglich ist, wenn man die Vernetzungskomponente in Form eines diblockierten Triisocyanats, welches einen der anfangs angeführten Formel entsprechenden Aufbau hat, in das Bindemittel einführt.

Die vorliegende Erfindung betrifft demgemäß ein Verfahren zur Herstellung von kathodisch abscheidbaren und bei erhöhter Temperatur selbstvernetzenden Lackbindemitteln, welches dadurch gekennzeichnet ist, daß man Hydroxylgruppen und/oder primäre und/oder sekundäre Aminogruppen enthaltende Lackbindemittel mit diblockierten Triisocyanaten der allgemeinen Formel

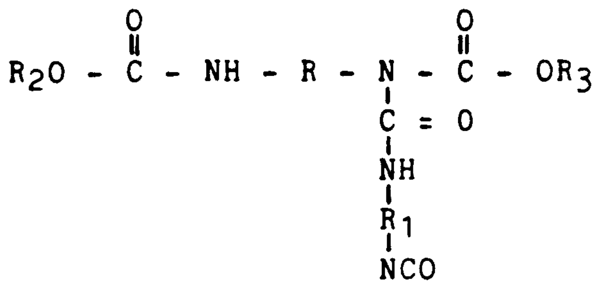

wobei

- R ein von einem Diisocyanat stammender aliphatischer, cycloaliphatischer oder aromatischer Rest,
- $R_1$ ein von einem Diisocyanat, dessen NCO-Gruppen überwiegend verschiedene Reaktivität aufweisen, stammender aliphatischer, cycloaliphatischer oder aromatischer Rest ist und
- $R_2$ und $R_3$ gleiche oder verschiedene Reste von NCO-Blokkierungsmitteln darstellen,

bei 70 bis 100 ° C bis zum vollständigen Verbrauch der Isocyanatgruppen umsetzt.

Die Erfindung betrifft weiters die Verwendung der in dieser Weise hergestellten Lackbindemittel zur Formulierung von kathodisch abscheidbaren Elektrotauchlacken.

Als Basisharze zur Reaktion mit den erfindungsgemäß eingesetzten diblockierten Triisocyanaten können alle Harze verwendet werden, die über eine ausreichende Anzahl von isocyanatreaktiven Gruppen verfügen, damit einerseits die Reaktion mit der Monoisocyanatverbindung erfolgen kann, andererseits solche Gruppen für die Vernetzungsreaktion zur Verfügung stehen. Für ihren Einsatz als wasserverdünnbare Elektrotauchlack-Bindemittel müssen die Basisharze eine entsprechende Zahl von protonierbaren Gruppen aufweisen, soferne diese Gruppen nicht zur Gänze oder anteilig über entsprechende Isocyanatverbindungen eingeführt werden.

Produkte dieser Art, die als Basisharze im Sinne der vorliegenden Erfindung eingesetzt werden können, sind in großer Zahl in der Literatur beschrieben. Es handelt sich dabei vor allem um Epoxidharz-Aminaddukte verschiedensten Aufbaues, sowie Acryl- oder Polydien-(co)-polymerisate, modifizierte Phenolether, Polyester, Polyether u. dgl.

Aufgrund der umfangreichen Literatur scheint eine nähere Beschreibung der Herstellungsverfahren für diese Harze nicht erforderlich. Die bevorzugten Typen werden exemplarisch in den Ausführungsbeispielen dargestellt.

Die erfindungsgemäß eingesetzten diblockierten Triisocyanate werden durch Reaktion von 1 Mol eines vollblokkierten Diisocyanats mit 1 Mol eines nichtblockierten Diisocyanats, dessen NCO-Gruppen überwiegend unterschiedliche Reaktivität aufweisen, bei 70 bis 120 ° C, gegebenenfalls in Gegenwart eines Katalysators, hergestellt. Es hat sich gezeigt, daß bei richtiger Wahl der Reaktionstemperatur nur eine NCO-Gruppe des nichtblokkierten Diisocyanats verbraucht wird und die freie NCO-Gruppe der entstehenden Allophanatverbindung auch bei verlängerter Reaktionszeit oder Lagerung des Produktes nicht reagiert. Die maximale Reaktionstemperatur muß demgemäß so gewählt werden, daß noch keine wesentliche Reaktion der freien NCO-Gruppe des Produktes und/oder noch keine wesentliche Abspaltung des Blokkierungsmittels erfolgt.

Für die Vollblockierung kann jedes Diisocyanat herangezogen werden, soferne seine NCO-Gruppen einer Blockierung, sowie der Entblockierung bei Temperaturen zwischen 120 und 200 ° C, zugänglich sind.

Als Diisocyanate für die Reaktion mit dem vollblockierten Diisocyanat müssen zur Erzielung einheitlicher Produkte Verbindungen eingesetzt werden, deren NCO-Gruppen unterschiedliche Reaktivität aufweisen. Beispiele für handelsübliche Produkte dieser Art sind das Isophorondiisocyanat oder das 2,4-Toluylendiisocyanat. Beim Einsatz technischer Isomerengemische, wie sie bei vielen Handelsprodukten des Toluylendiisocyanats vorliegen (80 % 2,4- und 20 % 2,6-TDI), ist mit Abweichungen zu rechnen, die jedoch für die weitere Verwendung meist ohne wesentliche Bedeutung sind.

Als Blockierungsmittel werden die aus der Literatur bekannten, ein reaktives Wasserstoffatom aufweisenden, Verbindungen eingesetzt (siehe z.B. "Methoden der Organischen Chemie", (HOUBEN-WEYL), Bd. 14/2, Seiten 61 - 70, G. Thieme-Verlag, Stuttgart 1963). Definitionsgemäß müssen die Blockierungsmittel bei einer für die Praxis brauchbaren Temperatur unter intermediärer Rückbildung der Isocyanatgruppe abgespalten werden.

Beispiele für Blockierungsmittel sind
Monohydroxylverbindungen, wie Alkanole, Glykolmonoether, Hydroxyalkylacrylate, Dialkylalkanolamine, Ketoxime,
Lactame, wie epsilon-Caprolactam oder delta-Valerolactam,
CH-aktive Verbindungen wie Acetylaceton, Acetessigester oder Malonesterderivate,
aliphatische Amine, wie 2-Ethylhexylamin, Dibutylamin, Dimethyl- oder Diethylaminopropylamin.

Selbstverständlich können auch Mischungen verschiedener Blockierungsmittel eingesetzt werden. Bei Verwendung geeigneter Aminoalkohole, wie der genannten Dialkylalkanolamine, oder von prim.-tert. Aminen wird durch das Blockierungsmittel gleichzeitig eine protonierbare, bei der Härtung sich abspaltende Gruppe eingeführt.

Bei der Herstellung der erfindungsgemäß eingesetzten Monoisocyanatverbindungen wird das Diisocyanat bei 30 bis 50 °C mit dem Blockierungsmittel in einem solchen Mengenverhältnis umgesetzt, daß beide NCO-Gruppen blokkiert werden. Das vollblockierte Diisocyanat wird dann mit einer äquimolaren Menge eines Diisocyanates, welches unterschiedlich reaktive NCO-Gruppen aufweist, bei 70 bis 120 °C zum Monoisocyanat umgesetzt. Gegebenenfalls kann die Reaktion durch basische Katalysatoren, wie Triethylamin oder auch ein basisches Blockierungsmittel, beschleunigt werden. Vorteilhafterweise wird die Zugabe des Diisocyanats bei ca. 70 °C begonnen und die Temperatur nach Maßgabe des Reaktionsablaufes gesteigert. Bei der angewandten Maximaltemperatur darf weder eine Reaktion der zweiten NCO-Gruppe noch eine Abspaltung des Blockierungsmittels eintreten. Unter den gegebenen Bedingungen kommt die Reaktion bei halbseitiger Umsetzung des Diisocyanats zum Stillstand.

Die Umsetzung der Monoisocyanatverbindung mit dem Basisharz erfolgt bei 70 bis 100 °C bis zum vollständigen Verbrauch der Isocyanatgruppen, vorteilhafterweise in Gegenwart eines organischen, isocyanat-inerten Lösemittels, wie dem Monoethylenglykolmonoethyletheracetat oder einem Ethylenglykoldiether. Gegebenenfalls wird das erfindungsgemäß hergestellte Bindemittel mit weiteren Harzen kombiniert.

Die Formulierung, Herstellung und Verarbeitung von kathodisch abscheidbaren Elektrotauchlacken aus den erfindungsgemäß hergestellten Bindemitteln erfolgt nach den üblichen, dem Fachmann bekannten Methoden. Gegebenenfalls können die Lacke auch in konventioneller Weise durch Spritzen, Tauchen oder Fluten verarbeitet werden.

Die folgenden Beispiele erläutern die Erfindung, ohne sie in ihrem Umfang zu beschränken. Alle Angaben in Teilen oder Prozenten beziehen sich, sofern nichts anderes angegeben ist, auf Gewichtseinheiten. Der NCO-Wert gibt die Menge der freien Isocyanatgruppen in Gew.-% an.

In den Beispielen werden folgende Abkürzungen verwendet (soferne nicht im Text erläutert):

| | |
|---|---|
| TDI/80 | Toluylendiisocyanat (handelsübliches Isomerengemisch; 80 % 2,4-% 20% 2,6-TDI) |
| 2,4-TDI | 2,4-Toluylendiisocyanat (techn.) |
| TMHMDI | Trimethylhexamethylendiisocyanat |
| IPDI | Isophorondiisocyanat |
| EH | 2-Ethylhexanol |
| BG | Monoethylenglykolmonobutylether |
| DEOLA | Diethylethanolamin |
| BOX | Butanonoxim |
| DEAPA | Diethylaminopropylamin |
| AC | Acetylaceton |
| TEA | Triethylamin |
| CL | epsilon-Caprolactam |
| DMBA | Dimethylbenzylamin |
| DGDME | Diethylenglykoldimethylether |
| EGAC | Monoethylenglykolmonoethyletheracetat |
| EEW | Epoxyäquivalentgewicht |
| ES | Essigsäure |
| AS | Ameisensäure |
| DBTL | Dibutylzinndilaurat |
| POCT | Bleioctoat (31 % Pb) |

(A) Herstellung der diblockierten Triisocyanatverbindungen (MIC)

Das für die Vollblockierung vorgesehene Diisocyanat (I) (1 Mol) wird in einem geeigneten Reaktionsgefäß vorgelegt und das Blockierungsmittel (2 Mol) bei 30 bis 40 °C unter Kühlung kontinuierlich zugegeben.

Anschließend wird die Temperatur weiter bis zum vollständigen Umsatz aller NCO-Gruppen gehalten. Nach Erwärmen auf 70 ° C wird, gegebenenfalls nach Zusatz eines Katalysators, das für die weitere Reaktion vorgesehene Diisocyanat (II) (1 Mol) langsam zugegeben. Die Temperatur wird dabei langsam auf die vorgesehene Maximaltemperatur gesteigert. Wenn der theoretische NCO-Wert für das Monoisocyanat erreicht ist, wird die Temperatur noch 15 Minuten gehalten. Das Produkt kann unmittelbar weiterverarbeitet oder bei Raumtemperatur gelagert werden.

Beim Einsatz von Isocyanaten mit unterschiedlich reaktiven NCO-Gruppen als Diisocyanat (I) und als Diisocyanat (II) kann die Reaktion auch in der Weise erfolgen, daß das Blockierungsmittel (2 Mol) im Reaktionsgefäß vorgelegt wird und die erste Hälfte (1 Mol) des Diisocyanats bei 30 bis 40 ° C zugegeben wird. Anschließend wird unter Temperaturerhöhung die zweite Hälfte (1 Mol) des Diisocyanats zugegeben und reagiert.

Die Mengenverhältnisse, Reaktionsbedingungen und Kennwerte sind in der folgenden Tabelle 1 zusammengefaßt.

**Tabelle 1**

| MIC | Diisocyanat (I) Tle (Jeweils 1 Mol) | Blockierungsmittel Tle (Mol) | Diisocyanat (II) Tle (Jeweils 1 Mol) | Katalysator Gew.-% | Max.Reaktionstemp. °C | Molmasse | NCO Wert theor. | NCO Wert gef. |
|---|---|---|---|---|---|---|---|---|
| 1 | 174 TDI/80 | 260 (2,0) EH | 222 IPDI | 0,5 TEA | 120 | 656 | 6,4 | 6,35 |
| 2 | 210 TMHMDI | 177 (1,5) BG<br>59 (0,5) DEOLA | 174 2,4-TDI | -- | 105 | 620 | 6,8 | 6,7 |
| 3 | 222 IPDI | 174 (2,0) BOX | 222 IPDI | -- | 110 | 618 | 6,8 | 6,8 |
| 4 | 174 TDI/80 | 234 (1,8) EH<br>26 (0,2) DEAPA | 174 2,4-TDI | -- | 105 | 608 | 6,9 | 6,9 |
| 5 | 210 TMHMDI | 118 (1,0) BG<br>113 (1,0) CL | 222 IPDI | 0,8 TEA | 120 | 663 | 6,3 | 6,2 |
| 6 | 174 TDI/80 | 130 (1,0) EH<br>117 (1,0) DEOLA | 222 IPDI | -- | 110 | 643 | 6,5 | 6,5 |
| 7 | 174 TDI/80 | 200 (2,0) AC | 174 2,4-TDI | 0,5 DMBA | 120 | 548 | 7,7 | 7,6 |
| 8 | 210 TMHMDI | 177 (1,5) BG<br>59 (0,5) DEOLA | 174 TDI/80 | -- | 110 | 620 | 6,1 | 5,4 |

(B) Herstellung der Basisharze (BH)

(BH 1) 500 Tle eines Epoxidharzes auf Basis von Bisphenol A (EEW ca. 500) werden in 214 Tlen DGDME gelöst und bei 110 °C mit 83 Tlen eines Halbesters aus Phthalsäureanhydrid und 2-Ethylhexanol in Gegenwart von 0,5 g Triethylamin als Katalysator bis zu einer Säurezahl von

weniger als 3 mg KOH/g reagiert. Dann werden 120 Tle eines NH-funktionellen Oxazolidins aus Aminoethylethanolamin, 2-Ethylhexylacrylat und Formaldehyd, sowie 26 Tle Diethylaminopropylamin zugefügt und der Ansatz bei 80 °C bis zu einem Epoxidwert von praktisch 0 umgesetzt. Der Ansatz wird mit 200 Tlen DGDME verdünnt (Hydroxylzahl ca. 180 mg KOH/g).

(BH 2) Ein in bekannter Weise aus 228 Tlen Bisphenol A, 220 Tlen Nonylphenol und 59 Tlen Paraformaldehyd (91 %) hergestelltes Novolakharz, welches mit 174 Tlen Propylenoxid verethert ist, wird in 200 Tlen DGDME gelöst. Das Produkt enthält 3 Mol aliphatische Hydroxylgruppen.

(BH 3) 228 Tle Bisphenol A (1 Mol) werden mit 260 Tlen Diethylaminopropylamin (2 Mol) und 66 Tlen Paraformaldehyd 91 % (2 Mol) in Gegenwart von 131 Tlen Toluol als Azeotropschleppmittel bis zur Abtrennung von 42 Tlen Reaktionswasser umgesetzt. Das Produkt enthält 2 Mol sekundäre Aminogruppen.

(BH 4) 950 Tle eines Epoxidharzes auf Basis Bisphenol A (EEW ca. 475) werden in 430 Tlen DGDME mit 105 Tlen (1,0 Mol) Diethanolamin und 65 Tlen (0,5 Mol) Diethylaminopropylamin bei 60 - 80 °C bis zum vollständigen Verbrauch aller Epoxygruppen umgesetzt (Hydroxylzahl ca. 300 mg KOH/g).

(BH 5) 55%ige Lösung in EGAC eines Polyesters aus 0,5 Mol Isophthalsäure, 1,0 Mol Trimethylolpropan, 0,7 Mol 1,6-Hexandiol (Säurezahl unter 5 mg KOH/g, Hydroxylzahl ca. 280 mg KOH/g).

## (C) Erfindungsgemäße Herstellung der Lackbindemittel

### Beispiel 1:

In einem mit Rührer, Thermometer und Zugabegefäß ausgestatteten Reaktionsgefäß werden 1143 Tle des Basisharzes (BH 1), entsprechend 729 Tlen Festharz, mit 312 Tlen der Isocyanatverbindung (MIC 1) bei 70 °C gemischt und bei einer langsam bis 100 °C steigenden Temperatur bis zu einem NCO-Wert von 0 reagiert. Der Ansatz wird mit DGDME auf einen Festkörpergehalt von 60 % verdünnt. Das Produkt weist eine Aminzahl von 64 mg KOH/g auf.

### Beispiel 2:

In gleicher Weise wie im Beispiel 1 werden 834 Tle (BH 2), entsprechend 634 Tlen Festharz, mit 643 Tlen (MIC 6) reagiert und mit DGDME auf einen Festkörpergehalt von 62 % verdünnt. Der Ansatz wird weiter mit einer 547 Tlen Festharz entsprechenden Menge des (BH 4) gemischt. Das Produkt weist eine Aminzahl von 61 mg KOH/g auf.

### Beispiel 3:

In gleicher Weise wie im Beispiel 1 werden 1550 Tle (BH 4), entsprechend 1120 Tlen Festharz, mit 603 Tlen (MIC 5) reagiert und mit DGDME auf einen Festkörpergehalt von 60 % verdünnt. Das Produkt weist eine Aminzahl von 65 mg KOH/g auf.

### Beispiel 4:

In gleicher Weise wie im Beispiel 1 werden 545 Tle der 55%igen Lösung des (BH 5) mit 200 Tlen (MIC 6) reagiert und mit EGAC auf einen Festkörpergehalt von 65 % verdünnt. Der Ansatz wird weiter mit einer 333 Tlen Festharz entsprechenden Menge des (BH 1) gemischt. Das Produkt weist eine Aminzahl von 72 mg KOH/g auf.

### Beispiel 5:

In gleicher Weise wie im Beispiel 1 werden 643 Tle (BH 3), entsprechend 512 Teilen Festharz, mit 1216 Tlen (MIC 4) reagiert und mit DGDME auf einen Festkörpergehalt von 60 % verdünnt. Nach Zugabe von 190 Tlen eines Bisphenol A-Diglycidylethers (EEW 190) und 186 Tlen 2-Ethylhexylglycidylether wird der Ansatz weitere 3 Stunden bei 100 °C reagiert. Das Produkt weist eine Aminzahl von 78 mg KOH/g auf.

Beispiel 6:

In gleicher Weise wie im Beispiel 1 werden 1143 Tle (BH 1), entsprechend 729 Tlen Festharz, mit 243 Tlen (MIC 3) reagiert und mit DGDME auf einen Festkörpergehalt von 65 % verdünnt. Das Produkt weist eine Aminzahl von 69 mg KOH/g auf.

Beispiel 7:

In gleicher Weise wie im Beispiel 1 werden 834 Tle (BH 2), entsprechend 634 Tlen Festharz, mit 930 Tlen (MIC 2) reagiert und mit DGDME auf einen Festkörpergehalt von 65 % verdünnt. Das Produkt weist eine Aminzahl von 27 mg KOH/g auf.

Beispiel 8:

In gleicher Weise wie im Beispiel 1 werden 1550 Tle (BH 4), entsprechend 1120 Tlen Festharz, mit 548 Tlen (MIC 7) reagiert und mit DGDME auf einen Festkörpergehalt von 65 % verdünnt. Nach Zumischen von 548 Teilen (BH 2), entsprechend 417 Tlen Festharz, weist das Produkt eine Aminzahl von 54 mg KOH/g auf.

Beispiel 9:

Entspricht Beispiel 7, jedoch werden anstatt 930 Tle (MIC 2) 930 Tle (MIC 8) eingesetzt.

Herstellung von Prüflacken

Gemäß den Angaben in der folgenden Tabelle 2 werden die Harze mit der Säure und dem Katalysator versetzt und mit Wasser auf den angegebenen Festkörpergehalt verdünnt. Der Klarlack wird dann mit der Pigmentpaste versetzt. Nach einer Homogenisierungszeit von 24 Stunden werden mit den Prüflacken zinkphosphatierte Stahlbleche beschichtet und bei der in der Tabelle 2 angegebenen Temperatur eingebrannt.

Die Bleche weisen bei einer Filmstärke von 23 ± 2 µm eine Salzsprühbeständigkeit (ASTM-B 117-64; Ablösung am Kreuzschnitt unter 2 mm) von mehr als 1000 Stunden auf.

Die verwendete Pigmentpaste wird in folgender Weise hergestellt:

100 Tle Festharz des Pastenbindemittels gemäß Beispiel 2 der AT-PS 380 264 werden nach Zugabe von 5 Tlen eines Netzmittels auf Basis eines Acetylenalkohols (berechnet als Festsubstanz, eingesetzt als 25%ige Lösung in Ethylglykol), mit 24 Tlen Milchsäure (5 n) und deionisiertem Wasser in einen 15%igen wäßrigen Klarlack übergeführt. Nach Zugabe von 24 Tlen Farbruß, 1104 Tlen Titandioxid und 72 Tlen basischem Bleisilikat erfolgt eine Vermahlung in einer Labormühle. Die resultierende Pigmentpaste hat einen Festkörper von ca. 51 % und ein Pigment/Bindemittel-Verhältnis von 12 : 1.

Tabelle 2

| Lack Nr. | Tle Bindemittellösung (aus Bsp.) | N(1) | K(2) | Klarlack % | PP(3) | P/B(4) | EBT(5) |
|---|---|---|---|---|---|---|---|
| 1 | 167 (1) | 40 AS | 0,8 DBTL | 13 | 106 | 0,5 : 1 | 180 |
| 2 | 161 (2) | 50 AS | 1,0 DBTL | 15 | 106 | 0,5 : 1 | 160 |
| 3 | 167 (3) | 45 ES | 1,0 POCT | 15 | 85 | 0,4 : 1 | 150 |
| 4 | 154 (4) | 45 AS | 0,6 DBTL | 15 | 106 | 0,5 : 1 | 180 |
| 5 | 167 (5) | 40 AS | 0,8 DBTL | 12 | 127 | 0,6 : 1 | 160 |
| 6 | 154 (6) | 45 ES | - | 15 | 64 | 0,3 : 1 | 150 |
| 7 | 154 (7) | 60 AS | 0,5 POCT | 15 | 106 | 0,5 : 1 | 160 |
| 8 | 167 (8) | 50 ES | 1,0 POCT | 14 | 85 | 0,4 : 1 | 180 |
| 9 | 154 (9) | 60 AS | 0,5 POCT | 15 | 106 | 0,5 : 1 | 160 |

(1) Neutralisationsmittel: mMol Säure pro 100 g Festharz
(2) Katalysator: Gew.-% Metall bezogen auf Festharz
(3) Pigmentpaste: Menge als Feststoff
(4) Pigment-Bindemittelverhältnis im Tauchlack
(5) Einbrenntemperatur für die abgeschiedenen Lackfilme.

## Patentansprüche

1. Verfahren zur Herstellung von kathodisch abscheidbaren und bei erhöhter Temperatur selbstvernetzenden Lackbindemitteln, dadurch gekennzeichnet, daß man Hydroxylgruppen und/oder primäre und/oder sekundäre Aminogruppen enthaltende Lackbindemittel mit diblockierten Triisocyanaten der allgemeinen Formel

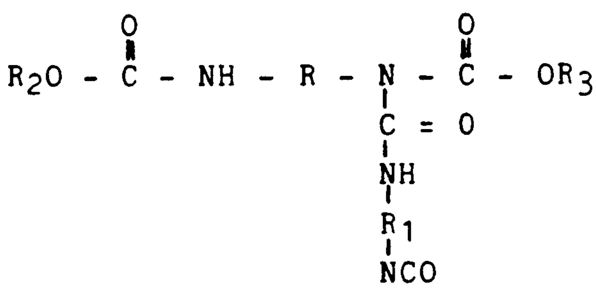

wobei

R ein von einem Diisocyanat stammender aliphatischer, cycloaliphatischer oder aromatischer Rest,

$R_1$ ein von einem Diisocyanat, dessen NCO-Gruppen überwiegend verschiedene Reaktivität aufweisen, stammender aliphatischer, cycloaliphatischer oder aromatischer Rest ist

und

$R_2$ und $R_3$ gleiche oder verschiedene Reste von NCO-Blockierungsmitteln darstellen,

bei 70 bis 100 °C bis zum vollständigen Verbrauch der Isocyanatgruppen umsetzt.

2. Verwendung der selbstvernetzenden Lackbindemittel herstellbar nach dem Verfahren nach Anspruch 1 zur Formulierung von kathodisch abscheidbaren Elektrotauchlacken.

## Claims

1. Process for the preparation of cathodically depositable paint binders which are self-crosslinking at elevated temperature, characterized in that paint binders containing hydroxyl groups and/or primary and/or secondary amino groups are reacted with doubly blocked triisocyanates of the general formula

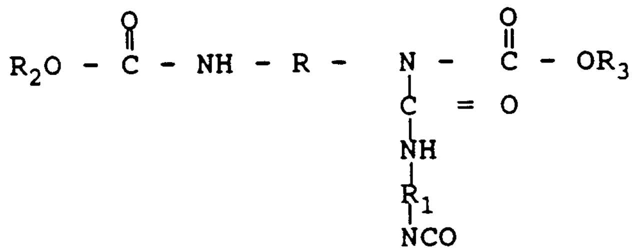

in which

R is an aliphatic, cycloaliphatic or aromatic radical derived from a diisocyanate,

$R_1$ is an aliphatic, cycloaliphatic or aromatic radical derived from a diisocyanate whose NCO groups have predominantly different reactivities, and

$R_2$ and $R_3$ represent identical or different radicals of NCO blocking agents, at 70 to 100 °C until the isocyanate groups have been totally consumed.

2. Use of the self-crosslinking paint binders prepared according to the process of Claim 1 for the formulation of cathodically depositable electrocoating paints.

## Revendications

1. Procédé de préparation de liants de peintures déposables à la cathode et autoréticulants à haute température, caractérisé en ce que l'on fait réagir des liants de peinture contenant des groupes hydroxyle et/ou amino primaires et/ou secondaires avec des triisocyanates dibloqués de formule générale

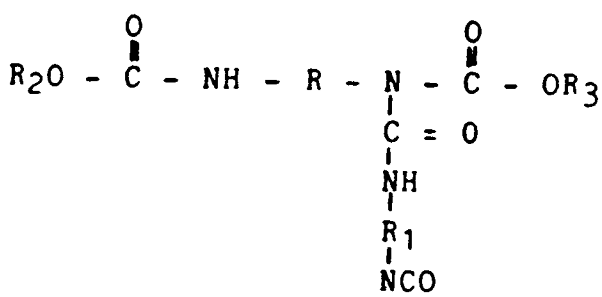

dans laquelle

R représente un reste aliphatique, cycloaliphatique ou aromatique dérivant d'un diisocyanate,

$R_1$ représente un reste aliphatique, cycloaliphatique ou aromatique dérivant d'un diisocyanate dont les groupes NCO présentent des réactivités essentiellement différentes, et

$R_2$ et $R_3$ représentent des restes identiques ou différents d'agents de blocage de NCO,

à une température de 70 à 100 °C, jusqu'à la consommation complète des groupes isocyanate.

2. Utilisation des liants de peinture autoréticulants pouvant être préparés par le procédé selon la revendication 1 pour la formulation de peintures applicables par électroimmersion déposables à la cathode.